# EUROPEAN PATENT APPLICATION

(11) **EP 1 048 799 A1**
(43) Date of publication of application: **02.11.2000**
(21) Application number: 99830259.0
(22) Date of filing: 30.04.1999
(51) Int. Cl.: E04F 11/18, F16B 7/04

(54) **A modular structure for making handrails**

(71) Applicant: M.P.S. S.R.L., 24048 Treviolo (Bergamo) (IT)
(72) Inventor: Milesi, Flaviano, 24068 Seriate - Bergamo (IT)
(74) Representative: Tansini, Elio Fabrizio

(57) **Abstract**

A modular structure (1) for making handrails comprises a series of supports (4) able to be applied along walls of a building and a series of bearing elements (2, 3) rigidly engageable to the supports (4) by means of junction inserts (15) provided with gripping projections (16a) and with auxiliary gripping projections (17a). The gripping projections (16a) and the auxiliary gripping projections (16b) are inserted respectively in gripping seats (7a, 8a) obtained on the bearing elements (2, 3) and in auxiliary gripping seats (14a) obtained in the supports (4). The coupling of the bearing elements (2, 3) with the supports (4) by means of the junction inserts (15) allows to modify the angular position of the bearing elements (2, 3) with respect to the supports (4). To the supports (4) are moreover internally associated lighting units (20) able to be electrically connected to each other through cavities present in all the components of the structure (1).

## Description

The present invention relates to a modular structure for making handrails able to be applied along walls of buildings, of the type comprising the characteristics expressed in the preamble to claim 1.

In particular, the modular structure according to the invention is suitable for the realisation of a handrail of the kind commonly installed in locations accessible to the public such as hospitals, schools, hotels, stations or others and designed to provide a bearing or gripping means to ease walking.

As is well known, modular handrails exist, essentially comprising a plurality of supports which are fastened to the walls at pre-set mutual distance and mutually aligned to support respective bearing elements positioned one after the other to define a continuous structure that follows the development of the walls at a constant height from the floor.

More specifically, a modular structure normally comprises rectilinear bearing elements, extending along the walls whereto the structure is applied, and curvilinear bearing elements applied in correspondence with the comers of the walls to join two contiguous rectilinear elements or to serve as a finish for the extremity of the modular structure. Each rectilinear bearing element normally comprises an extruded section bar made of aluminium alloy and having a substantially "H" shaped cross section profile. In detail, the "H" section bar presents a flat central portion integral in its extremities with lateral wings substantially curved according to a circular profile.

Onto the section bar can also be applied, by snapping, one or more covering elements made of plastic material, destined to define the visible portion of the rectilinear bearing element. Each covering element presents a downward facing "C" shaped cross section profile. The assembly operation provides for the edges of the "C" profile to be placed to bear down on upper portions of the lateral wings of the "H" section bar. The covering element is then pushed downward, so that its structure is elastically deformed expanding and then settling onto the section bar after the snapping action.

Differently from the rectilinear bearing elements, each curvilinear bearing element is made of plastic with one or more coupling plates projecting at least from one terminal edge of the bearing element itself. The curvilinear bearing element is engageable on the rectilinear bearing element through the insertion of the coupling plates in a corresponding longitudinal seat defined between the wings and the central portion of the "H" profile. After insertion, the curvilinear bearing element is fastened to the section bar of the rectilinear bearing element by means of threaded elements that join the coupling plates to the central portion of the section bar.

The junction of rectilinear bearing elements consecutively aligned occurs similarly to the junction of the curvilinear bearing element with the "H" section bar. To join two contiguous section bars, junction pins or blocks are used, suitable to be inserted with a first extremity into the longitudinal seat of a section bar and with a second extremity into the longitudinal seat of the other section bar. In this case as well each junction block can be fastened to the central portion of each section bar by means of threaded fastening elements.

The connection between the continuous structure defined by the rectilinear and curvilinear bearing elements and the supports fastened to the wall is obtained by means of additional threaded elements engaged through the central portion of the "H" section bar of each rectilinear element to be screwed into a shaped fastening portion, sustained in overhang by the respective support and inserted between the wings of the section bar. The Applicant has noted that the modular structures of the type described above can be improved in several respects, mainly in relation to their ease of installation and mounting, as well as to their structural strength and reliability over time.

It should also be noted that current modular structures require the production of a series of different curvilinear bearing elements, destined to be suited to the different connection conditions, for instance in correspondence with convex or concave angles and/or in particular cases, such as angles formed in correspondence with staircases, where the handrail must necessarily follow a route distributed over different floors. The need to have a large number of different components available is counterproductive both in relation to realisation costs and to the ease of assembly of the modular structures.

The subject of the present invention therefore is a modular structure for making handrails able to be applied along walls of buildings, comprising the features expressed in the characterising part of claim 1.

Further features and advantages of the invention shall be made more readily apparent from the detailed description of a preferred, but not exclusive embodiment of a modular structure for making handrails able to be applied along walls of buildings, according to the present invention.

The description shall be provided below with reference to the accompanying drawings, provided purely by way of non limiting example, wherein:
- Figure 1 is an exploded perspective view of a modular structure for making a handrail able to be applied along walls of buildings;
- Figure 2 is a section view of a support of the modular structure, taken according to trace II-II of Figure 1;
- Figure 3 is a cross section view taken according to trace III-III of Figure 1 on a rectilinear bearing element comprised in the modular structure.

With reference to the aforementioned drawings, the number 1 indicates in its entirety a modular structure for making handrails able to be applied along walls of buildings, according to the present invention.

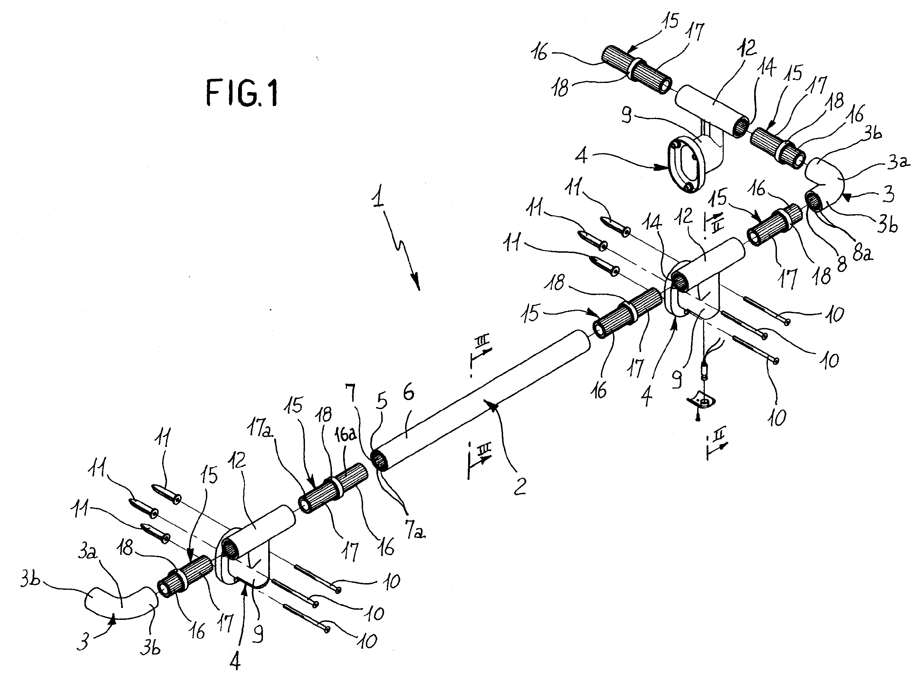

As Figure 1 shows, the modular structure 1 essentially comprises a plurality of bearing elements 2, 3 able to be assembled with a plurality of supports 4 to form a continuous handrail extending along the development of the walls of a building at a pre-set distance from the floor.

The bearing elements 2, 3 are distinguished in rectilinear support elements 2 able to be applied along the walls, and curvilinear bearing elements 3 employable in correspondence with the angles formed by contiguous walls to guarantee the continuity of the handrail from one wall to the other.

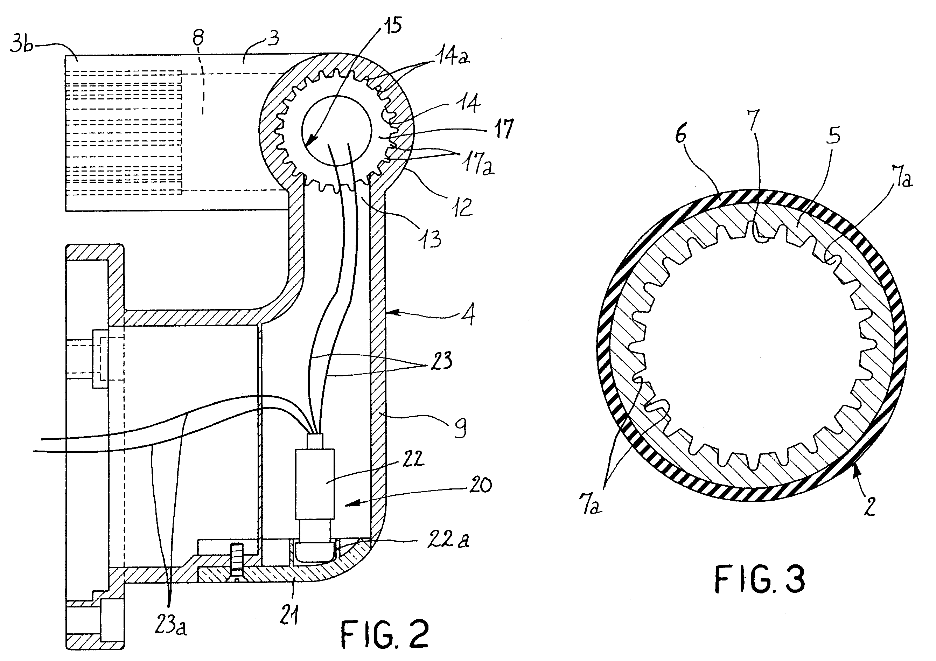

As shown in section in Figure 3, each rectilinear bearing element 2 comprises at least a tubular section bar 5 with substantially circular cross section profile, made of aluminium alloy by extrusion and externally covered with a finishing coating 6, preferably made of plastic material, which can advantageously be injection moulded on the section bar itself.

The inner surface of the rectilinear bearing element 2 defines an engagement seat 7 whereby the rectilinear bearing element itself is rigidly engageable to a respective support 4.

More specifically, in the engagement seat 7 of the rectilinear bearing element 2 are obtained gripping seats 7a which extend along the entire development of the inner surface of the section bar 5.

Differently from the rectilinear bearing element 2, each curvilinear bearing element 3 is preferably realised in the form of an injection moulded bent pipe made of plastic material. More in particular, the curvilinear bearing element 3 presents a curved central segment 3a and two rectilinear terminal segments 3b extending from the opposite extremities of the curved segment 3a and oriented according to a pre-set angle, preferably equal to 90°, with respect to one another. The curvilinear bearing element 3, too, presents an inner surface that constitutes an engagement seat 8 whereby it is possible to fasten the curvilinear bearing element itself to the respective support 4. In the engagement seat 8 of the curvilinear bearing element 3 are obtained gripping seats 8a defined by grooves extending at least along the rectilinear segments 3b.

Each support 4 comprises an internally hollow fastening structure whereby the support itself is fastened to the respective wall with the aid of threaded elements 10 engaging in respective dowels 11. The fastening portion 9 supports a tubular connecting portion 12, whereby the bearing elements 2, 3 are rigidly engaged to the support 4. The fastening portion 9 communicates, through at least an opening 13, with the tubular connecting portion 12, for purposes which will become more readily apparent farther on.

In detail, the tubular connecting portion 12 presents a substantially circular cross section profile, and defines with its inner surface an auxiliary engagement seat 13 provided with auxiliary gripping seats 14a each constituted by a groove extending essentially along the development of the tubular connecting portion itself.

Preferably both the gripping portions 7a, 8a of the rectilinear and curvilinear bearing elements 2 and 3, and the auxiliary gripping seats 14a of the attachment portions 12 of each support 4 are distributed according to an angular step no greater than 20°, and more preferably equal to 15°.

In order to join the bearing elements 2, 3 rigidly to the respective supports 4, appropriate coupling means 15 are associated to the modular structure 1. Such coupling means comprise a series of junction inserts 15 able to be interposed between the bearing elements 2, 3 and the respective supports 4.

Preferably each junction insert 15 comprises at least a first coupling shank 16 engageable by axial insertion into the engagement seat 7, 8 of the respective bearing element 2, 3 and a second coupling shank 17, opposite to the first coupling shank, engageable by axial insertion into the auxiliary engagement seat 14 of the respective support 4.

The first engagement shank 16 presents cylindrical shape with substantially circular profile and gripping projections 16a extending axially on an outer surface thereof. The second coupling shank 17 also presents cylindrical shape having a substantially circular cross section profile, and auxiliary gripping projections 17a obtained axially on its outer surface.

The gripping projections 16a of the first coupling shank 16 and the auxiliary gripping projections 17a of the second coupling shank 17 are distributed according to the same angular step as the gripping seats 7a, 8a and as the auxiliary gripping seats 14a, i.e. according to a step no greater than 20° and preferably equal to 15°.

In detail, the first coupling shank 16 is joined in the same piece to the second coupling shank 17, a diametral stop expansion being interposed between the coupling shanks. The diametral stop expansion 18 advantageously presents an outer diameter equal to the outer diameter of the bearing elements 2, 3 and of the tubular connecting portions 12 of the supports 4, thereby guaranteeing a superficial continuity along the entire handrail formed as a result of the engagement of the junction inserts 15 into the respective bearing elements 2, 3 and into the supports 4.

Preferably, each junction insert 15 is internally hollow to define, once it is assembled with the other components of the modular structure 1, a continuous internal passage channel extending through the fastening portions 9 of the supports 4 and through the bearing elements 2, 3, and communicating with the inner cavities of the fastening portions 9 of each support 4.

In accordance with a further aspect of the present invention which may be exploited also independently from the above description, the pre-arrangement of the intercommunicating inner cavities in the modular structure 1 is advantageously exploited to include one or more lighting units 20 usable for instance as night and/or emergency lights to indicate the corridor route and/or signal the presence of obstacles. To this end, in one or more of the supports 4 of the modular structure 1 can be advantageously integrated at least one of said lighting units 20, removably engaged in the fastening portion 9 of the support itself. Preferably, said lighting unit 20 essentially comprises an optical diffuser 21, defined for instance by a transparent screen removably engaged to the fastening portion 9 of the support and facing the inner cavity thereof, and a light bulb 22 housed in the support 4, in correspondence with the optical diffuser itself. Preferably, the light bulb 22 is removably engaged in a seat 22a set in the optical diffuser 21, as Figure 2 clearly shows. The individual lighting units 20 can be electrically connected to each other by means of connecting electrical conductors 23 extending from one support 4 to the other, through the bearing supports 2, 3 and the tubular connecting portions 12 of the supports themselves. The electrical power supply of the lighting units 20 can be provided through further electrical power supply conductors 23a housed inside the fastening portion 9 of at least one of the supports 4 and connected to an electrical power supply line, preferably of the low voltage type, preinstalled in the wall whereon the modular structure 1 is engaged.

For the purpose of mounting the modular structure 1 according to the invention, the individual bearing elements 2, 3 are sequentially engaged to the respective supports 4, which in turn are fastened on the respective walls at the same distance from the wall. The engagement of each bearing element 2, 3 with the respective support 4 provides for the junction insert 15 to be inserted with the first coupling shank 16 into the support element itself, in such a way that the gripping projections 16a slidingly engage the respective gripping seats 7a, 8a present in the engagement seat 7, 8. In this way, the interaction between the gripping projections 16a of the junction insert 15 with the gripping seats 7a, 8a of the bearing element 2,3 allows rotatorily to lock the bearing element with respect to the junction insert itself. The junction insert 15 is also inserted with the second shank 17 into the tubular connecting portion 14 of the respective support 4 by the sliding of the auxiliary gripping projections 17a into the respective auxiliary gripping seats 14a of the tubular connecting portion 12. Once the bearing element 2, 3 is assembled with the respective support 4, both are rotatorily fastened with respect to one another thanks to the coupling realised between the gripping projections 16a with the gripping seats 7a, 8a and the auxiliary gripping projections 17a with the auxiliary gripping seats 14a.

In a manner similar to the one described above, it is possible, if need be, to obtain the mutual coupling between two contiguous rectilinear 2 and/or curvilinear 3 support elements.

Through at least one of the fastening portions 9 of the supports 4 the electrical power supply conductors 23a are connected to the respective lighting unit 20. The additional lighting units 20 can in turn be connected in cascade by means of the connecting electrical conductors 23 which extend from a lighting unit to the other through the cavity of the various components of the entire modular structure 1, or they can be directly connected to respective electrical power supply conductors 23a exiting the walls.

The invention attains important advantages.

The subject modular structure allows to realise handrail in a much simpler and faster way than the prior art, thanks to the possibility of assembling its individual components 2, 3, 4, 15 by means of simple axial insertion operations.

The invention further attains an appreciable reduction, with respect to known solutions, in the number of component types to be assembled in a modular manner to realise a handrail that follows the development of the walls whereon it is applied. In this respect, it should also be observed that each curvilinear bearing element 3 can be used both as a terminal element of the handrail, setting a single junction element 15 for the connection of the curvilinear element itself to the remaining part of the structure 1, and as a union element between two successive rectilinear segments, in correspondence both with a convex angle and with a concave angle formed by the walls, using two junction elements 15 inserted in correspondence with the opposite extremities of the curvilinear element itself.

It should further be noted that the grooved coupling junction between the junction inserts 15 and the bearing elements 2, 3 and support elements 4 allows to modify, according to requirements, the orientation of the plane of a curvilinear bearing element 3 and, thus, the mutual orientation of the two rectilinear bearing elements 2, between which is interposed the aforesaid curvilinear element. This possibility is particularly useful and advantageous in correspondence with angles formed by the walls in proximity to staircases and the like, where the development of the handrail must follow a broken line to remain parallel, for a certain segment, to the floor of the landing and, in a subsequent segment, to the flight of stairs.

The axial insertion of each junction element 15 into the respective engagement seats 7, 8 and 14 automatically determines, by effect of the mutual engagement between the gripping projections 16a, 17a and the gripping seats 7a, 8a, 14a, the rotatory locking of the bearing and/or support elements engaged by the connecting element itself.

It is also possible to obtain an axial locking effect, conferring to the outer surfaces of the shanks 16, 17 a slight conicity, developing to converge away from the central area of the junction insert itself. Additionally or alternatively, the axial locking of each junction insert 15 can be obtained by means of at least a threaded element traversing a diametral diaphragm positioned inside the insert itself coinciding with the diametral expansion 18, to engage operatively in a threaded seat set in the bearing element 2, 3 and/or in the connecting portion 14 of the support 4.

The tubular shape with closed profile of each bearing element 2, 3 also allows to realise the coating 6 directly by injecting plastic material on the entire outer surface of the bearing element itself, eliminating the need to perform any other additional operation for the engagement of the coating 6 upon assembling the modular structure 1 and determining an advantageous electrical isolation of the metal core constituting the section bar 5. This also eliminates the need to provide a grounding connection of the section bars 5.

The application of the coating 6 directly on the bearing elements further guarantees a greater stability of the coating itself, to the advantage of the safe employment of the handrail, in addition to a greater superficial continuity, advantageous not only from the aesthetic point of view but also from the standpoint of hygiene and health.

The invention has moreover attained the possibility of exploiting the presence of the handrail to install one or more lighting units, aimed for instance at indicating the corridor paths or the presence of obstacles during night-time hours and/or in emergencies.

## Claims

1. Modular structure for making handrails able to be applied along walls of buildings, of the type comprising:
- at least one support (4) rigidly engageable to a wall of a building;
- at least a bearing element (2, 3) rigidly engageable to said support (4);
- coupling means (15) to join the bearing element (2, 3) rigidly to the support (4),
characterised in that said coupling means (15) comprise at least a first coupling shank (16) engageable by axial insertion into an engagement seat (7, 8) of the bearing element (2, 3), said first coupling shank (16) being provided with longitudinal gripping projections (16a) engageable by sliding in respective gripping seats (7a, 8a) obtained in the engagement seat (7, 8) of the bearing element (2, 3) and interacting with said gripping seats (7, 8) to lock the bearing element (2, 3) rotatorily with respect to the support (4).

2. Structure according to claim 1, wherein said first coupling shank (16) presents cylindrical shape with substantially circular profile, said gripping projections (16a) being obtained on an outer surface of said first coupling shank (16).

3. Structure according to claim 1, wherein said coupling means (15) comprise at least a second coupling shank (17), opposite to the first coupling shank (16), engageable by axial insertion into an auxiliary engagement seat (14) of the support (4), said second coupling shank (17) being provided with auxiliary gripping projections (17a) engageable by sliding into respective auxiliary gripping seats (14a) obtained in the auxiliary engagement seat (14) of the support (4) and interacting with said auxiliary gripping seats (14a) to lock the bearing element (2, 3) rotatorily with respect to the support (4).

4. Structure according to claim 3, wherein said second coupling shank (17) presents cylindrical shape with substantially circular profile, said auxiliary gripping projections (17a) of the second coupling shank (17) being obtained on an outer surface of said second coupling shank (17).

5. Structure according to claim 4, wherein said support (4) comprises a tubular connecting portion (12) having substantially circular profile, said auxiliary engagement seat (4) being defined in said tubular connecting portion (12).

6. Structure according to claim 5, wherein said first and second coupling shanks (16, 17) are joined in the same piece to form a junction insert (15) able to be interposed between the bearing element (2, 3) and the support (4).

7. Structure according to claim 6, wherein said junction insert (15) presents a diametral expansion (18) interposed between the first coupling shank (16) and the second coupling shank (17), and having its outer diameter equal to the outer diameter of the bearing element (2, 3) and of the connecting portion (12) of the support (4).

8. Structure according to claim 1, wherein said bearing element (2, 3) presents tubular shape, said engagement seat (7, 8) being defined by an inner surface of the bearing element and said gripping seats (7a, 8a) being realised on said inner surface of the bearing element (2, 3) in such a way as to receive by insertion the first coupling shank (16).

9. Structure according to claim 8, wherein said bearing element (2) comprises at least a tubular section bar (5), made of aluminium alloy by extrusion, externally covered with a finishing coating (6), said finishing coating (6) being injection moulded on the section bar itself.

10. Structure according to claim 8, wherein said bearing element (3) presents a curvilinear development.

11. Structure according to claim 5, wherein said support (4) further comprises a hollow fastening portion (9) whereby the support (4) is rigidly engageable to the wall of a building, said fastening portion (9) being in communication with said tubular connecting portion (12) by means of at least an opening internal to the support (4).

12. Structure according to claim 11, wherein said junction insert (15) and said bearing element (2, 3) are internally hollow to define together with the support (4) an inner passage channel which extends from the fastening portion (9) of the support (4) to the bearing element.

13. Modular structure, in particular according to claim 12, further comprising at least a lighting unit (20) integrated in said support.

14. Structure according to claim 13, wherein said lighting unit (20) comprises an optical diffuser (21) removably engaged to the fastening portion (9) of the support and at least a light bulb (22) housed in the support (4) in correspondence with the optical diffuser (21).

15. Structure according to claim 4, wherein said gripping projections (16a, 17a) of the first and of the second shank (16, 17) are distributed according to an angular step no greater than 20°.

16. Structure according to claim 4, wherein said gripping seats (7a, 8a, 14a) of the bearing element (2, 3) and of the tubular connecting portion (12) of the support (4) are distributed according to an angular step no greater than 20°.
